# EUROPÄISCHE PATENTSCHRIFT

(11) **EP 2 069 113 B1**
(45) Veröffentlichungstag und Bekanntmachung des Hinweises auf die Patenterteilung: **24.02.2010**
(21) Anmeldenummer: 06805899.9
(22) Anmeldetag: 27.09.2006
(51) Int. Cl.: B25J 19/00, H02G 11/00

(54) **VORRICHTUNG ZUM FÜHREN EINES ZUMINDEST EINE VERSORGUNGSLEITUNG AUFWEISENDEN SCHLAUCHES**
DEVICE FOR GUIDING A HOSE COMPRISING AT LEAST ONE SUPPLY LINE
DISPOSITIF DE GUIDAGE D'UN TUYAU SOUPLE COMPRENANT AU MOINS UNE CONDUITE D'ALIMENTATION

(43) Veröffentlichungstag der Anmeldung: 17.06.2009
(73) Patentinhaber: Leoni Protec Cable Systems GmbH, 98574 Schmalkalden (DE)
(72) Erfinder: BURLOT, Claude, 78830 BULLION (FR)
(74) Vertreter: Tergau & Pohl Patentanwälte
(86) Internationale Anmeldenummer: PCT/EP2006/009378
(87) Internationale Veröffentlichungsnummer: WO 2008/037276

(56) Entgegenhaltungen:
- WO-A-2005/123350
- DE-U1- 20 113 742
- US-A1- 2004 090 159
- US-A1- 2005 095 903

## Beschreibung

Die Erfindung betrifft eine Vorrichtung zum Führen eines zumindest eine Versorgungsleitung aufweisenden Schlauches, insbesondere zum Führen eines Schlauchpakets eine Industrieroboters , mit einem zumindest drei Führungsstangen aufweisenden Führungselement, in dem der Schlauch beweglich gegen die Rückstellkraft eines Rückstellelements führbar ist.

In vielen Anwendungsbereichen ist es erforderlich, ein beweglich gelagertes Maschinenteil an Versorgungsleitungen (elektrisch, hydraulisch, pneumatisch, Datenleitungen etc.) anzuschließen. Für eine kontrollierte Führung der Versorgungsleitungen ist hierzu oftmals eine Vorrichtung zum Führen der Versorgungsleitungen und insbesondere zum Längenausgleich der Versorgungsleitungen vorgesehen.

So ist beispielsweise aus der WO 2005/123350 A1 eine Vorrichtung zum Führen und zum Längenausgleich für ein Schlauchpaket eines Industrieroboters beschrieben. Das Schlauchpaket ist hierbei in einem zweiteiligen Führungselement geführt, welches einen axialen Führungsabschnitt sowie einen sich an diesen anschließenden Ausgleichsabschnitt aufweist, in dem ein seitliches Umlenken der Versorgungsleitung erfolgt. Der axiale Führungsabschnitt kann hierbei durch Führungsstangen gebildet sein, an die sich endseitig ein in etwa u-förmiges Gehäuse anschließt, in dem das seitliche Umlenken erfolgt. Der Schlauchmantel des Schlauchpakets endet innerhalb des Gehäuses. Die einzelnen Versorgungsleitungen treten im Gehäuse aus dem Schlauchmantel heraus und werden einzelweise aus dem Gehäuse geführt. Durch diesen Aufbau sind die einzelnen Versorgungsleitungen innerhalb des Gehäuses gegen Verschmutzungen geschützt.

Der Erfindung liegt die Aufgabe zugrunde, eine einfache und flexible Vorrichtung zum Führen und zum Längenausgleich für einen Schlauch mit darin angeordneten Versorgungsleitungen, insbesondere für ein Schlauchpaket eines Industrieroboters anzugeben.

Die Aufgabe wird gemäß der Erfindung gelöst durch eine Vorrichtung mit den Merkmalen des Anspruchs 1. Danach umfasst die Vorrichtung ein Führungselement, in dem der Schlauch im montierten Zustand beweglich gegen die Rückstellkraft eines Rückstellelements geführt wird. Die sich in Längsrichtung gegenüberliegenden Endseiten des Führungselements sind durch einen vorderen, einen Schlaucheingang bildenden Haltering und ein rückseitiges Halteelement gebildet. Die Führungsstangen sind zwischen dem Haltering und dem Halteelement eingespannt. Gleichzeitig sind zwischen den Führungsstangen mehrere seitliche Austrittsöffnungen für die zumindest eine Versorgungsleitung gebildet.

Das Führungselement und damit die Vorrichtung weisen daher insgesamt einen einfachen Aufbau auf, da sich an das rückseitige Halteelement keine weiteren Komponenten wie beispielsweise ein Gehäuse oder sonstige Komponenten anschließen. Vielmehr ist das Führungselement ausschließlich gebildet zwischen dem vorderen Haltering, dem rückseitigen Halteelement und den dazwischen angeordneten Führungsstangen. Durch die Verwendung von Führungsstangen ist eine ausreichend hohe Stabilität gegeben. Unter Führungsstangen werden hierbei allgemein längliche stangenartige Elemente verstanden, die sowohl als massive Stangen aus Vollmaterial als auch als Röhren ausgebildet sein können. Die Ausgestaltung als Röhren bietet Stabilitätsvorteile. Zugleich ist durch die Führungsstangen eine sehr hohe Flexibilität geschaffen, da durch die Freiräume zwischen den einzelnen sich in Längsrichtung ausbreitenden Führungsstangen mehrere seitliche Austrittsöffnungen zum Herausführen der einzelnen Versorgungsleitungen gebildet sind. Im montierten Zustand werden daher die einzelnen Versorgungsleitungen bevorzugt seitlich aus dem Führungselement herausgeführt. Dem Anwender des Industrieroboters steht es nunmehr offen, je nach Bedarf die Versorgungsleitungen wahlweise zu der einen oder auch anderen Seite des Industrieroboters herauszuführen. Es sind keinerlei Umbaumaßnahmen oder dergleichen erforderlich. Vielmehr ist Konzeptbedingt das wahlweise Herausführen der Versorgungsleitungen zu beliebigen Seiten hin möglich. Durch diese sehr hohe Flexibilität eignet sich das derartig ausgebildete Führungselement universell für alle möglichen Arten von Industrierobotern und Anwendungsfälle. Es brauchen daher für unterschiedliche Anwendungsfälle keine unterschiedlichen Führungselemente konzipiert und bereitgestellt werden, wodurch insgesamt die Kosten niedrig gehalten werden. Gleichzeitig ist durch die ausreichend hohe Stabilität und dem langgestreckten Führungselement eine sichere Führung und eine zuverlässige Ausgleichsbewegung erreicht, so dass unkontrollierte Schleifen oder Schlaufen des Schlauchpakets am Roboterarm vermieden sind. Vielmehr ist das Schlauchpaket sicher und zuverlässig nahe am Roboterarm hin zu einer Roboterhand geführt.

Die Länge des Führungselements ist über die Länge der Führungsstangen problemlos einstellbar und liegt üblicherweise im Bereich zwischen 0,5 m und 1 m, insbesondere bei etwa 0,7 m. Die zwischen den Führungsstangen gebildete freie Querschnittsfläche, die einen Aufnahmeraum für das Schlauchpaket definiert, weist üblicherweise einen Durchmesser von etwa 0,1 m auf. In Abhängigkeit des eingesetzten Schlauchpakets kann der Durchmesser auch größer oder kleiner ausgeführt sein.

Gemäß einer bevorzugten Ausgestaltung sind genau vier auf einer Kreislinie gleichmäßig verteilt angeordnete Führungsstangen vorgesehen. Das Führungselement ist daher insgesamt um seine Längsrichtung rotationssymmetrisch ausgebildet, und zwar um eine Drehung um 90°. Durch die Wahl von exakt vier Führungsstangen ist zum einen eine sehr gute Stabilität gegeben und zum anderen sind hierdurch insgesamt vier seitliche Austrittsöffnungen in die vier Raumrichtungen senkrecht zur Längsrichtung gebildet. Aufgrund der symmetrischen Ausgestaltung mit den vier Führungsstangen kann das Führungselement beliebig montiert werden und weist immer die gleichen Eigenschaften auf. Diese 90°-Rotationssymmetrie ist daher besonders vorteilhaft für die hohe Flexibilität des Führungselements.

Zweckdienlicherweise ist das Führungselement weiterhin Spiegelsymmetrisch bezüglich einer Mittenebene ausgebildet, die senkrecht zur Längsrichtung orientiert ist. Insbesondere ist das gesamte Führungselement punktssymmetrisch bezüglich eines auf der zentralen Längsachse mittig angeordneten Mittenpunktes. Durch diese hohe Symmetrie lässt sich ein sehr einfacher und kostengünstiger Aufbau unter der Verwendung von Gleichteilen erzielen. Gleichzeitig ist durch diese hohe Symmetrie eine nahezu beliebige Einbaulage ermöglicht, so dass hier keine Besonderheiten berücksichtigt werden müssen und das Führungselement ohne spezielle Anpassungen für beliebige Anwendungsfälle eingesetzt werden kann. Durch diese hohe Symmetrie ist zudem auch das vordere und das rückseitige Ende prinzipiell nicht unterscheidbar, wodurch eine zusätzliche Flexibilität erhalten wird. Zum einen braucht keine Vorzugsrichtung beim Einbauen des Führungselements berücksichtigt werden, da die beiden Endseiten des Führungselements wahlweise als Schlaucheingang dienen können. Zugleich wird durch diese Ausgestaltung auch am rückseitigen Ende eine zusätzliche Austrittsöffnung bereitgestellt, so dass die Versorgungsleitungen allseitig beliebig aus dem Führungselement herausgeführt werden können. Die Versorgungsleitungen können daher nach rechts, links, oben, unten oder auch rückseitig aus dem Führungselement herausgeführt werden.

Zweckdienlicherweise ist daher vorgesehen, dass das rückseitige Halteelement identisch zum vorderseitigen Haltering ausgebildet ist.

Um eine einfache Montage des Schlauchpakets zu ermöglichen sind die beiden Halteringe bevorzugt jeweils entlang einer Teilungsebene trennbar sind. Insbesondere sind hierbei die Halteringe aus zwei Ringsegmenten ausgebildet, die miteinander verschraubt sind. Es besteht auch die Möglichkeit, dass die beiden Ringsegmente an ihrer einen Seite klappbar miteinander verbunden sind, so dass die beiden Ringsegmente unverlierbar aneinander befestigt sind. Da das gesamte Führungselement lediglich durch die Führungsstangen und die Ringsegmente gebildet ist, kann durch das Trennen oder Aufklappen der Ringsegmente das gesamte Führungselement geöffnet bzw. aufgeklappt werden, so dass das Schlauchpaket problemlos eingelegt oder ausgetauscht werden kann.

Um die Teilevielfalt für das Führungselement möglichst gering zu halten sind in einer zweckdienlichen Ausgestaltung und in Fortführung des strengen Symmetriegedankens die Halteringe aus vorzugsweise zwei identischen Ringsegmenten gebildet.

Für ein schonendes Einführen des Schlauchpakets in den den Schlaucheingang bildenden Haltering ist vorzugsweise ein trichterförmiges Schlaucheinführungselement im Haltering gehalten. Dieses Schlaucheinführungselement ist beispielsweise eine Gummi- oder auch Kunststofftülle mit geringem Reibwert. Zweckdienlicherweise bildet dieses Schlaucheinführungselement zugleich ein Widerlager für das Rückstellelement, das sich über dieses Schlaucheinführungselement am Führungselement abstützt.

Gemäß einer zweckdienlichen Ausgestaltung sind die Führungsstangen zusätzlich mit einer abriebfesten Umhüllung versehen, um insbesondere ein reibungsarmes Gleiten des Schlauchpakets zu ermöglichen. Zugleich dient diese beispielsweise nach Art einer Gleitbeschichtung ausgebildete Umhüllung als Abrassionsschutz für die Führungsstangen. Die Umhüllung besteht insbesondere aus einem Kunststoff mit geringem Reibungswert, beispielsweise eine Teflon-Beschichtung. Zweckdienlicherweise sind hierbei zwei optisch unterscheidbare Beschichtungen beispielsweise unterschiedlicher Farben vorgesehen, die übereinander auf den Führungsstangen angebracht sind. Durch die optische Unterscheidbarkeit ist eine Verschleißanzeige ausgebildet. Alternativ zur Ausgestaltung als Beschichtung kann die Umhüllung auch eine über die metallischen Führungsstäbe gezogene schlauchartige Schutzhülle sein.

Zur Befestigung des Führungselements am Industrieroboter oder allgemein an einer Vorrichtung ist ein Befestigungselement vorgesehen. Das Führungselement ist hierbei mit seinen beiden endseitigen Halteringen am Befestigungselement befestigt. Hierzu weisen die beiden Halteringe zweckdienlicherweise jeweils zwei einander gegenüberliegende abgeflachte Befestigungsseiten auf.

In einer zweckdienlichen Ausgestaltung sind mehrere Führungselemente nebeneinander angeordnet am Industrieroboter befestigt. Durch den sehr einfachen und kompakten Aufbau können insgesamt mehrere der Führungselemente an einem Industrieroboter befestigt sein, so dass parallel mehrere Schlauchpakete zu der Roboterhand geführt werden können. Dies bietet beispielsweise die Möglichkeit, für unterschiedliche Bearbeitungswerkzeuge, die an der Roboterhand befestigt sind, unterschiedlich spezialisierte Schlauchpakete vorzusehen und diese am Roboter in den einzelnen Führungselementen zu belassen, um sie nicht regelmäßig umrüsten zu müssen. Beim Wechsel des Bearbeitungswerkzeugs wird lediglich das zum Bearbeitungswerkzeug zugehörige Schlauchpaket an das Bearbeitungswerkzeug angeschlossen.

Insgesamt ist in einer bevorzugten Ausgestaltung in der montierten Stellung der Schlauch durch den vorderen Haltering eingeführt, dessen Schlauchmantel sich bis zu einem im Führungselement angeordneten Schlauchanschlag erstreckt. Dieser ist durch ein wulstartiges Endstück am Schlauch gebildet, welches beispielsweise als Ringelement auf den Schlauch endseitig aufgeklemmt ist. Dieses ist insbesondere ein Kunststoffelement mit einem geringen Reibwert und dient zugleich als Gleitelement, über das sich der Schlauch an den Führungsstangen abstützt. Zugleich dient dieser Schlauchanschlag als Anschlag für eine als Rückstellelement wirkende Schraubenfeder, die zwischen dem Schlauchanschlag und dem vorderen Haltering, insbesondere dem Schlaucheinführungselement, eingespannt ist. Aus dem Schlauchmantel treten im Anschluss an den Schlauchanschlag endseitig die Versorgungsleitungen heraus, und werden seitlich zwischen zwei benachbarten Führungsstangen aus dem Führungselement heraus zu einer Anschlussschnittstelle geführt. Die Anschlussschnittstelle ist hierbei beispielsweise direkt am Führungselement oder auch an einem Roboterarm befestigt. Von dieser Schlauchschnittstelle führt die Versorgungsleitung entlang des Roboters weiter zu einer Versorgungsstation. Das gesamte Schlauchpaket erstreckt sich daher von dieser Anschlussschnittstelle zu einem vorderen Kupplungsteil des Schlauchpakets, mit dem dieses an das Bearbeitungswerkzeug befestigt wird, welches für die jeweils gewünschte Bearbeitung an der Roboterhand angeordnet ist.

Gemäß einer zweckdienlichen Weiterbildung ist vorgesehen, dass mehrere Versorgungsleitungen in Gruppen zusammengefasst sind und die Gruppen jeweils zu unterschiedlichen Seiten aus dem Führungselement herausgeführt sind. Dies unterstreicht noch einmal die hohe Flexibilität des Führungselements und erlaubt, dass unterschiedliche Arten von Schnittstellen an unterschiedlichen Positionen des Roboters problemlos befestigt werden können, da die einzelnen Versorgungsleitungen problemlos an unterschiedlichen Seiten aus dem Führungselement herausgeführt werden können.

Ausführungsbeispiele der Erfindung werden im Folgenden anhand der Figuren näher erläutert. Es zeigen jeweils in schematischen Darstellungen:
- Fig. 1: eine perspektivische Darstellung eines mehrachsigen Industrieroboters mit einem Führungselement und einem darin geführtem Schlauchpaket,
- Fig. 2: eine perspektivische Teil-Explosionsdarstellung des Führungselements,
- Fig. 3: eine perspektivische Darstellung des Industrieroboters gemäß Fig. 1 in einer alternativen Anwendung des Führungselements,
- Fig. 4: eine perspektivische Darstellung des Industrieroboters gemäß Fig. 1 mit mehreren paarweise nebeneinander angeordneten Führungselementen und
- Fig. 5: eine perspektivische Darstellung des Industrieroboters gemäß Fig. 1, bei dem das Schlauchpaket durch das Führungselement hindurch geführt ist.

In den Fig. sind gleiche Teile mit den gleichen Bezugszeichen versehen.

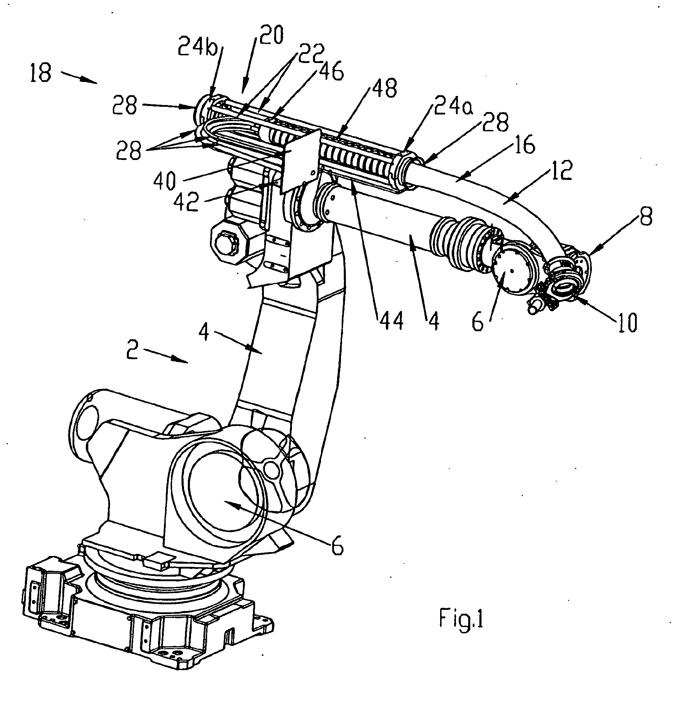

In den Fig. 1 sowie 2 bis 5 ist jeweils ein Industrieroboter 2 zu erkennen, der mehrere Roboterarme 4 aufweist, die zueinander um Drehachsen 6 verschwenkbar sind. Insgesamt handelt es sich hierbei um einen üblichen 6-achsigen Industrieroboter, wie er beispielsweise in der Automobilindustrie in der Kraftfahrzeug-Montage eingesetzt wird. Am letzten Roboterarm 4 ist eine Kupplungsstelle 8 vorgesehen, an der ein Bearbeitungswerkzeug tauschbar ankuppelbar ist. Dieses Bearbeitungswerkzeug kann unterschiedlich ausgebildet sein. Je nach Art des Bearbeitungswerkzeugs muss es unterschiedlich versorgt werden. Das Bearbeitungswerkzeug ist beispielsweise ein Schweißwerkzeug, ein Schraub- oder Stanzwerkzeug oder auch ein Schneidwerkzeug. Am Bearbeitungswerkzeug selbst können daher elektrische, pneumatische, hydraulische Komponenten sowie Sensoren etc. vorgesehen sein. Um das Bearbeitungswerkzeug geeignet zu versorgen, wird dies mit einem Schlauchpaket 12 über eine Kupplungsteil 10 verbunden. In dem Schlauchpaket 12 werden üblicherweise mehrere Versorgungsleitungen 14 als Einzelkomponenten einzelweise geführt. Diese Versorgungsleitungen 14 sind beispielsweise pneumatische, hydraulische, elektrische Leitungen oder auch Datenleitungen etc. Die Versorgungsleitungen 14 sind von einem Schlauchmantel 16 umgeben, welcher beispielsweise als Wellrohr oder auch als spezieller Kunststoffschlauch ausgebildet ist, und in dem die Versorgungsleitungen 14 mit einer gewissen Beweglichkeit geführt sind. Aufgrund der während der Bearbeitung eines Werkstücks erforderlichen Bewegungen des Roboters 2 oder auch des Bearbeitungswerkzeugs muss das Schlauchpaket 12 insgesamt flexibel sein und insbesondere muss es in Längsrichtung 18 dem Bearbeitungswerkzeug nachgeführt werden können. Um das Schlauchpaket 12 möglichst nahe und parallel zu dem oberen Roboterarm 4 zu führen ist am Industrieroboter 2 ein Führungselement 20 vorgesehen. In diesem ist das Schlauchpaket zumindest mit einem Teilstück in Längsrichtung 18 geführt. Zugleich ermöglicht das Führungselement 20 eine Ausgleichsbewegung in Längsrichtung 18, zieht also das Schlauchpaket 12 in eine Ausgangsposition zurück, so dass das Schlauchpaket 12 insgesamt in jeder Bearbeitungssituation eine gewisse Zugspannung aufweist und keine unkontrollierten Bewegungen ausführt.

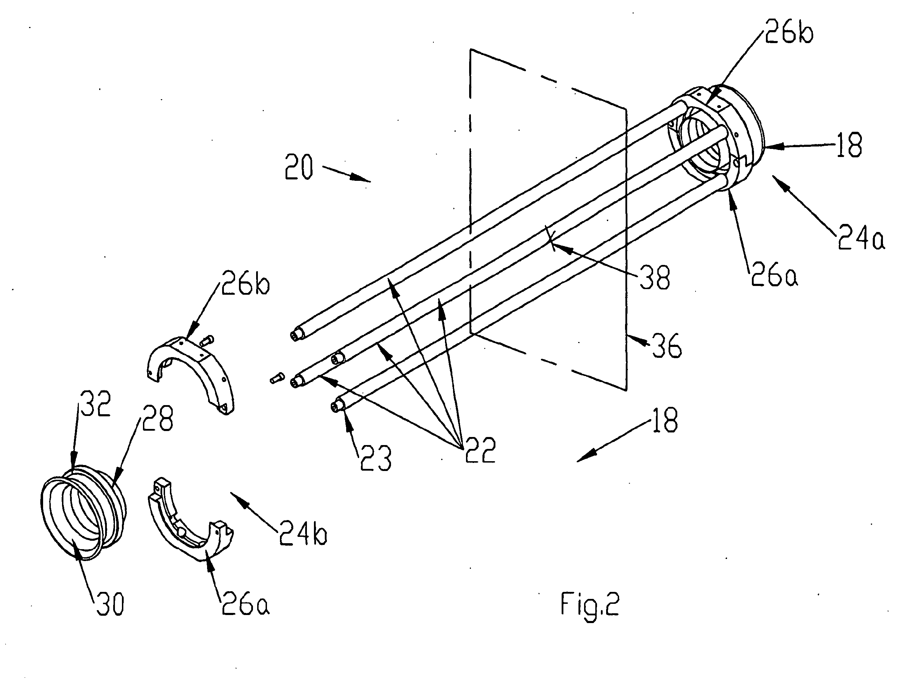

Das Führungselement 20, dessen spezieller Aufbau sich insbesondere aus Fig. 2 ergibt, ist gebildet im Wesentlichen durch vier rohrartige Führungsstangen 22 sowie einem vorderseitigen Haltering 24a und einem rückseitigen Haltering 24b. Die Führungsstange 22 sind zwischen den beiden Halteringen 24a, b eingespannt und bilden im Querschnitt gesehen die Eckpunkte eines Quadrats. So sind daher auf einer Kreislinie um 90° gleichmäßig verteilt angeordnet, wobei der Durchmesser des Kreises der Diagonalen zwischen den gegenüberliegenden Eckpunkten des Quadrats entspricht. Die Halteringe 24a, b sind jeweils wiederum gebildet durch zwei identisch ausgebildete Ringsegmente 26a, b die über Schrauben miteinander befestigt sind. In jedem Haltering 24a, b ist jeweils ein Schlaucheinführungselement 28 eingeklemmt. Dieses weist eine trichterförmige Einführöffnung 30 sowie eine umlaufende Ringnut 32 auf, in die ein entsprechender Ringsteg an den Halteringen 24a, b formschlüssig eingreift.

Die Schlaucheinführungselemente 28 bestehen aus Kunststoff und weisen einen möglichst geringen Gleitreibungskoeffizienten auf, um ein sanftes Einführen des Schlauchpakets 12 in das Führungselement 20 zu ermöglichen. Die Führungsstangen 22 sowie die Halteringe 24a,b bestehen demgegenüber aus einem Metall, insbesondere Stahl mit hoher Steifigkeit. Die Führungsstangen 22 sind zudem durch eine abriebfeste Umhüllung 23 aus Kunststoff geschützt.

Zwischen zwei benachbarten Führungsstangen 22 ist über die gesamte Länge der Führungsstangen 22 und damit im Wesentlichen über die gesamte Länge des Führungselements 20 jeweils eine seitliche Austrittsöffnung 34 gebildet.

Durch den hier dargestellten speziellen Aufbau weist das gesamte Führungselement 20 eine hohe Symmetrie auf und ist spiegelsymmetrisch zu einer gestrichelt dargestellten Mittenebene 36 sowie insbesondere auch punktsymmetrisch zu einem Mittenpunk 38 ausgebildet. Die Mittenebene 36 ist hierbei die Ebene senkrecht zur Längsrichtung 18 in der Mitte des Führungselements und der Mittenpunkt 38 ist der auf der Rotationsachse in dieser Mittenebene 36 liegende Punkt.

Durch diesen Aufbau des Führungselements 20 ergibt sich bei denkbar einfachster Ausgestaltung eine sehr hohe Flexibilität, was unterschiedlichste Anwendungsmöglichkeiten eröffnet. Entscheidend hierfür sind die seitlichen zwischen den Führungsstangen 22 ausgebildeten Austrittsöffnungen 34, durch die jeweils wahlweise die einzelnen Versorgungsleitungen 14 seitlich herausgeführt werden können. Zusätzlich besteht noch die Möglichkeit, die Versorgungsleitungen 14 oder auch das gesamte Schlauchpaket 12 durch den rückseitigen Haltering 24b aus dem Führungselement 20 wieder herauszuführen.

Die hohe Flexibilität wird nachfolgend insbesondere anhand der Fig. 1, 3 bis 5 illustriert. In den Ausführungsbeispielen gemäß den Fig. 1, 3 und 4 sind die Versorgungsleitungen 14 jeweils seitlich und einzelweise aus dem Führungselement 20 heraus zu einer Anschlussschnittstelle 40 geführt. Diese Anschlussschnittstelle 40 ist nur schematisch dargestellt und weist üblicherweise Steckkupplungen zum Anstecken der einzelnen Versorgungsleitungen 14 auf. Zu der Anschlussschnittstelle 40 führen am Roboter 2 entlanggeführte Zuführleitungen, die über die Anschlussschnittstelle 40 mit den Versorgungsleitungen 14 verbunden werden.

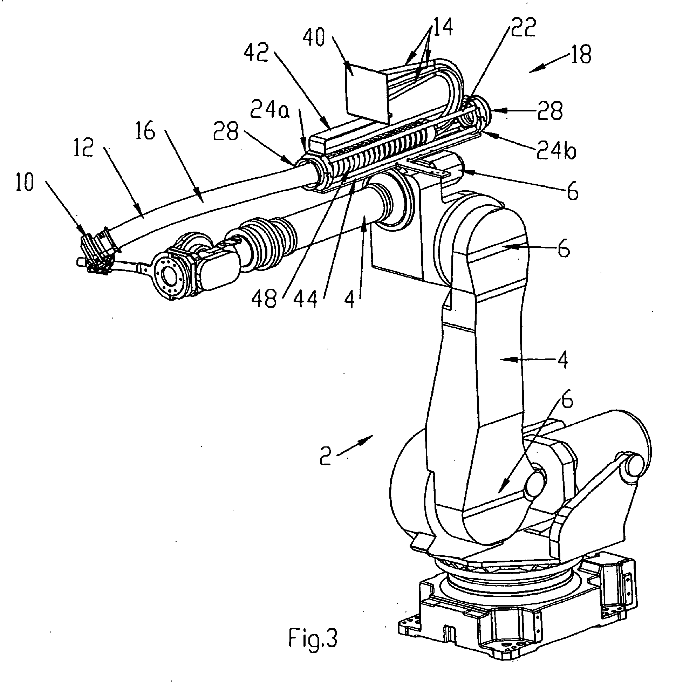

Wie aus den Figuren zu entnehmen ist, bietet das Führungselement 20 die Möglichkeit, dass die Versorgungsleitungen 14 sowohl seitlich (rechts - links) als auch nach oben aus dem Führungselement 20 herausgeführt werden. In den Ausführungsbeispielen ist hierbei die Anschlussschnittstelle 40 über einen Haltebügel 42 mit dem Führungselement 20 verbunden. Dies geschieht entweder durch eine direkte Befestigung des Haltebügels 42 am Führungselement 20, insbesondere am Haltering 24a (Fig. 3) oder auch durch mittelbare Befestigung des Haltebügels 42 an einer als Befestigungselement dienenden Befestigungsplatte 44. Über diese Befestigungsplatte 44 erfolgt generell die Befestigung des Führungselements 11 am Roboter 2. Die Befestigungsplatte 44 verläuft hierbei in Längsrichtung 18 parallel zu dem oberen Roboterarm 4.

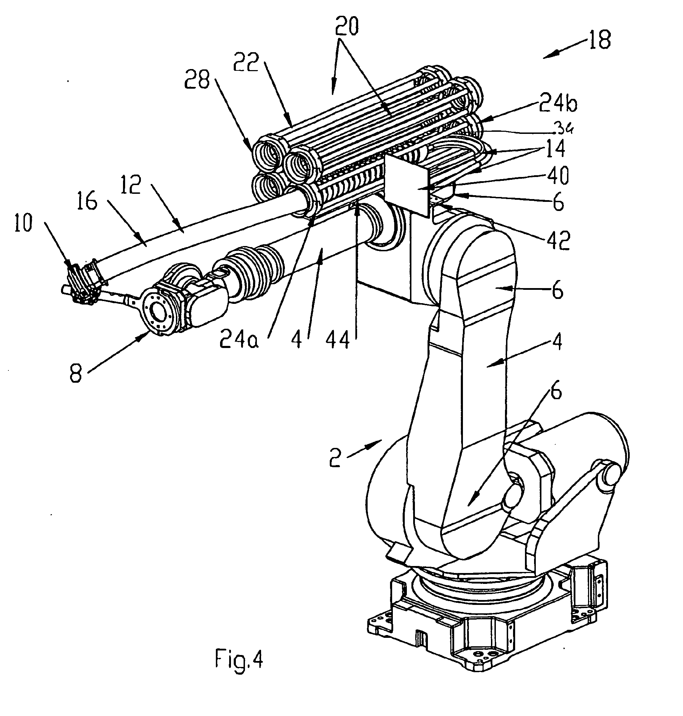

Bei der Ausführungsvariante gemäß Fig. 4 ist schließlich eine Variante mit insgesamt vier Führungselementen 20 dargestellt, die in einem Quadrat nebeneinander angeordnet sind. Diese Anordnung wird dadurch ermöglicht, dass jedes Führungselement 20 allseitig Austrittsöffnungen 34 aufweist, so dass für jedes Führungselement 20 eine seitliche bzw. eine obere Austrittsöffnung 34 frei bleibt. Durch die sehr einfache und kompakte Ausgestaltung des einzelnen Führungselemente 20 ist zudem eine insgesamt platzsparende Anordnung ermöglicht.

Bei den Ausführungsvarianten der Fig. 1, 3 und 4 endet der Schlauchmantel 16 jeweils innerhalb des Führungselements 20 an einem wulstartigen Schlauchanschlag 46. Der Schlauchanschlag 46 ist hierbei insbesondere ein auf den Schlauchmantel 16 aufgebrachter Ring. Der Schlauchanschlag 46 dient zum einen zur Gleitlagerung des Schlauchpakets 12 im Führungselement 20. Von besonderem Vorteil ist hierbei die wulstartige Ausbildung sowie die Ausgestaltung des Führungselements 20 mit den Führungsstangen 22. Insgesamt werden hierdurch nämlich nur vier punktförmige Kontakte zwischen dem Schlauchpaket 12 und den Führungsstangen 22 ausgebildet, so dass ein möglichst reibungsarmes Verschieben des Schlauchanschlags 46 ermöglicht ist. Weiterhin dient der Schlauchanschlag 46 als Widerlager für eine als Rückstellelement eingesetzte Schraubenfeder 48, die den Schlauchmantel 16 umgibt. Am anderen Ende stützt sich die Schraubenfeder 48 im Bereich des vorderen Halterings 24a insbesondere an dem dort angeordneten Schlaucheinführungselement 28 ab. Dieses weist hierzu insbesondere eine entsprechende Nut auf, in der die Schraubenfeder 48 mit ihrer Endseite einliegt.

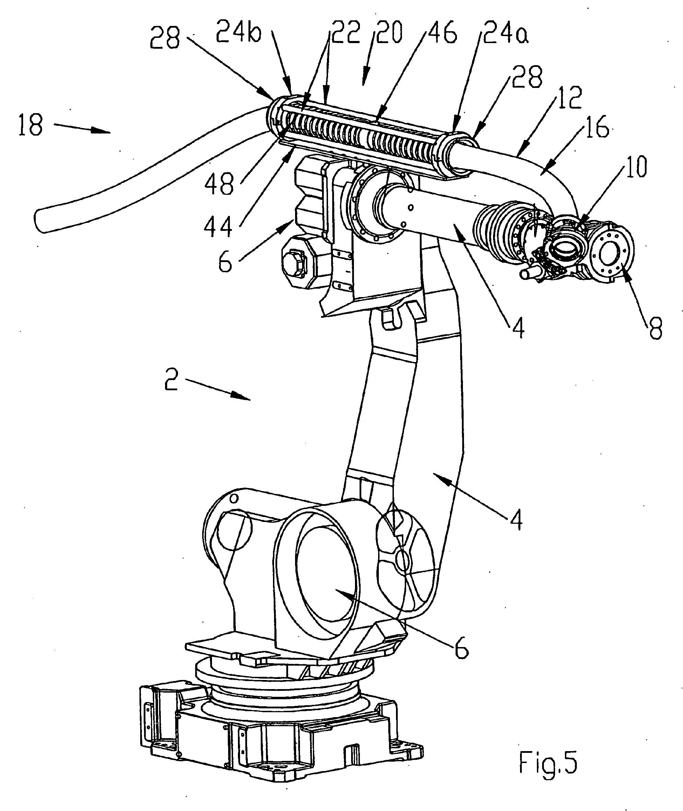

Die Ausführungsvariante gemäß Fig. 5 zeigt eine Ausgestaltung, bei der das Schlauchpaket 12 insgesamt in Längsrichtung 18 durch das Führungselement 20 hindurchgeführt ist. Das Führungselement 20 ist also insgesamt derart flexibel einsetzbar, dass nicht nur die Versorgungsleitungen 14 einzelweise seitlich oder rückwärtig herausgeführt werden können, vielmehr kann - falls erforderlich - auch das komplette Schlauchpaket 12 durch das Führungselement 20 hindurchgeführt werden. Beim Ausführungsbeispiel der Fig. 5 sind zwei Schraubenfedern 48 vorgesehen, die beidseitig zum Schlauchanschlag 46 angeordnet sind und durch Ihre Rückstellkräfte das Schlauchpaket 12 in eine definierte Ausgangsstellung, beispielsweise eine Mittenstellung bringen. Die Schraubenfedern 48 sind als Druckfedern ausgebildet. Alternativ zu der in Fig. 5 dargestellten Ausführungsvariante ist lediglich im vorderen Teilbereich zwischen dem Schlauchanschlag 46 und dem vorderen Haltering 24a die Schraubenfeder 48 vorgesehen, die dann lediglich eine Rückstellkraft ausübt.

### Bezugszeichenliste

- 2: Industrieroboter
- 4: Roboterarm
- 8: Kupplungsstelle
- 10: Kupplung
- 11: Länge des Führungselements
- 12: Schlauchpaket
- 14: Versorgungsleitung
- 16: Schlauchmantel
- 18: Längsrichtung
- 20: Führungselement
- 22: Führungsstange
- 23: Umhüllung
- 24a,b: Halteringe
- 26a,b: Ringsegmente
- 28: Schlaucheinführungselement
- 30: Einführöffnung
- 34: Austrittsöffnung
- 36: Mittenebene
- 38: Mittenpunkt
- 42: Haltebügel
- 44: Befestigungsplatte
- 46: Schlauchanschlag
- 48: Schraubenfeder

## Patentansprüche

1. Vorrichtung zum Führen eines zumindest eine Versorgungsleitung (14) aufweisenden Schlauches (12), insbesondere zum Führen eines Schlauchpakets eines Industrieroboters (2), mit einem zumindest drei Führungsstangen (22) aufweisenden Führungselement (20), in dem der Schlauch (12) beweglich gegen die Rückstellkraft eines Rückstellelements (48) führbar ist, **dadurch gekennzeichnet, dass** sich in Längsrichtung (18) gegenüberliegende Endseiten des Führungselements (20) durch einen vorderen einen Schlaucheingang bildenden Haltering (24a) und einem rückseitigen Halteelement (24b) gebildet sind, zwischen denen die Führungsstangen (22) eingespannt sind, und dass mehrere seitliche Austrittsöffnungen (34) für die zumindest eine Versorgungsleitung (14) zwischen jeweils zwei benachbarten Führungstangen (22) gebildet ist.

2. Vorrichtung nach Anspruch 1,
**dadurch gekennzeichnet,**
**dass** vier auf einer Kreislinie gleichmäßig verteilt angeordnete Führungsstangen (22) vorgesehen sind.

3. Vorrichtung nach Anspruch 1 oder 2,
**dadurch gekennzeichnet,**
**dass** das Führungselement (20) spiegelsymmetrisch bezüglich einer Mittenebene (36) senkrecht zur Längsrichtung (18) ausgebildet ist.

4. Vorrichtung nach einem der vorhergehenden Ansprüche,
**dadurch gekennzeichnet,**
**dass** das rückseitige Halteelement (24b) identisch zum vorderseitigen Haltering (24a) ausgebildet ist.

5. Vorrichtung nach einem der vorhergehenden Ansprüche,
**dadurch gekennzeichnet,**
**dass** der Haltering (24a) und das rückseitige Haltelement (24b) entlang einer Teilungsebene trennbar sind.

6. Vorrichtung nach einem der vorhergehenden Ansprüche,
**dadurch gekennzeichnet,**
**dass**, der Haltering (24a) aus mehreren insbesondere zwei gleichen Ringsegmenten (26a,b) zusammengesetzt ist.

7. Vorrichtung nach einem der vorhergehenden Ansprüche,
**dadurch gekennzeichnet,**
**dass** im Haltering (24a) ein trichterförmiges Schlaucheinführungselement (28) gehalten ist.

8. Vorrichtung nach einem der vorhergehenden Ansprüche,
**dadurch gekennzeichnet,**
**dass** die Führungsstangen (22) mit einer Umhüllung (23) versehen sind.

9. Vorrichtung nach Anspruch 8,
**dadurch gekennzeichnet,**
**dass** zwei optisch unterscheidbare Umhüllungen (23) vorgesehen sind.

10. Vorrichtung nach einem der vorhergehenden Ansprüche,
**dadurch gekennzeichnet,**
**dass** das Führungselement (20) mit seinem vorderen Haltering (24a) und dem rückseitigen Halteelement (24b) auf einem Befestigungselement (44) befestigt sind, über das das Führungselement (20) am Industrieroboter (2) befestigt ist.

11. Vorrichtung nach einem der vorhergehenden Ansprüche,
**dadurch gekennzeichnet,**
**dass** zumindest zwei nebeneinander angeordnete Führungselemente (20) am Industrieroboter (2) befestigt sind.

12. Vorrichtung nach einem der vorhergehenden Ansprüche,
**dadurch gekennzeichnet,**
**dass** der Schlauch (12) durch den vorderen Haltering (24a) eingeführt ist, dessen Schlauchmantel (16) sich lediglich bis zu einem im Führungselement (20) angeordneten Schlauchanschlag (46) erstreckt, dass zwischen dem Schlauchanschlag (46) und dem vorderen Haltering (24a) als Rückstellelement eine um den Schlauchmantel (16) geführte Feder (48) eingespannt ist und dass mehrere Versorgungsleitungen (14) aus dem Schlauchmantel (16) heraustreten, die seitlich zwischen zwei benachbarten Führungsstangen (22) aus dem Führungselement (20) heraus zu einer Anschlussschnittstelle (40) geführt sind.

13. Vorrichtung nach einem der vorhergehenden Ansprüche,
**dadurch gekennzeichnet,**
**dass** mehrere Versorgungsleitungen (14) in Gruppen zusammengefasst sind und die Gruppen zu unterschiedlichen Seiten aus dem Führungselement (20) herausgeführt sind.

## Claims

1. Device for guiding a hose (12) comprising at least one supply line (14), in particular for guiding a hose assembly of an industrial robot (2), with a guide element (20) which has at least three guide rods (22) and in which the hose (12) can be guided movably counter to the restoring force of a restoring element (48), **characterized in that** end faces of the guide element (20) which lie opposite one another in the longitudinal direction (18) are formed by a front holding ring (24a) forming a hose inlet and by a rear holding element (24b), between which the guide rods (22) are tension-mounted, and **in that** a plurality of lateral outflow orifices (34) for the at least one supply line (14) is formed in each case between two adjacent guide rods (22).

2. Device according to Claim 1, **characterized in that** four guide rods (22) arranged so as to be distributed uniformly on a circular line are provided.

3. Device according to Claim 1 or 2, **characterized in that** the guide element (20) is designed to be mirror-symmetrical with respect to a mid-plane (36) perpendicular to the longitudinal direction (18).

4. Device according to one of the preceding claims, **characterized in that** the rear holding element (24b) is designed identically to the front holding ring (24a).

5. Device according to one of the preceding claims, **characterized in that** the holding ring (24a) and the rear holding element (24b) are separable along a parting plane.

6. Device according to one of the preceding claims, **characterized in that** the holding ring (24a) is composed of a plurality of, in particular two, identical ring segments (26a, b).

7. Device according to one of the preceding claims, **characterized in that** a funnel-shaped hose introduction element (28) is held in the holding ring (24a).

8. Device according to one of the preceding claims, **characterized in that** the guide rods (22) are provided with a sheathing (23).

9. Device according to Claim 8, **characterized in that** two visually distinguishable sheathings (23) are provided.

10. Device according to one of the preceding claims, **characterized in that** the guide element (20) is fastened with its front holding ring (24a) and with the rear holding element (24b) on a fastening element (44), via which the guide element (20) is fastened to the industrial robot (2).

11. Device according to one of the preceding claims, **characterized in that** at least two guide elements (20) arranged next to one another are fastened to the industrial robot (2).

12. Device according to one of the preceding claims, **characterized in that** the hose (12) is introduced through the front holding ring (24a), the hose jacket (16) of which hose extends only as far as a hose stop (46) arranged in the guide element (20), **in that** a spring (48) guided around the hose jacket (16) is tension-mounted as a restoring element between the hose stop (46) and the front holding ring (24a), and **in that** a plurality of supply lines (14) emerge from the hose jacket (16) and are guided laterally between two adjacent guide rods (22) out of the guide element (20) to a connection interface (40).

13. Device according to one of the preceding claims, **characterized in that** a plurality of supply lines (14) are combined in groups, and the groups are led out of the guide element (20) onto different sides.

## Revendications

1. Dispositif pour guider un tuyau souple (12) qui englobe au moins une conduite d'alimentation (14), notamment pour guider un faisceau de tuyaux souples d'un robot industriel (2), le dispositif comprenant un élément de guidage (20) qui présente au moins trois barres de guidage (22) et dans lequel le tuyau souple (12) peut être guidé de manière mobile à l'encontre de la force de rappel d'un élément de rappel (48), **caractérisé en ce que** des côtés d'extrémité de l'élément de guidage (20), opposés dans la direction longitudinale (18), sont formés par un anneau de support avant (24a), qui réalise une entrée de tuyau, et par un élément de support arrière (24b), entre lesquels les barres de guidage (22) sont enserrées, et **en ce que** sont formées plusieurs ouvertures de sortie latérales (34) pour ladite au moins une conduite d'alimentation (14) respectivement entre à chaque fois deux barres de guidage (22) voisines.

2. Dispositif selon la revendication 1,
**caractérisé en ce que** sont prévues quatre barres de guidage (22) agencées de manière régulièrement répartie sur une ligne circulaire.

3. Dispositif selon la revendication 1 ou la revendication 2,
**caractérisé en ce que** l'élément de guidage (20) est d'une configuration symétrique inverse par rapport à un plan médian (36) perpendiculaire à la direction longitudinale (18).

4. Dispositif selon l'une des revendications précédentes,
**caractérisé en ce que** l'élément de support arrière (24b) est réalisé de manière identique à l'anneau de support avant (24a).

5. Dispositif selon l'une des revendications précédentes,
**caractérisé en ce que** l'anneau de support (24a) ainsi que l'élément de support arrière (24b) peuvent être divisés le long d'un plan de joint.

6. Dispositif selon l'une des revendications précédentes,
**caractérisé en ce que** l'anneau de support (24a) est composé de l'assemblage de plusieurs, notamment de deux segments d'anneau (26a,b) identiques.

7. Dispositif selon l'une des revendications précédentes,
**caractérisé en ce que** dans l'anneau de support (24a) est maintenu un élément d'introduction de tuyau (28) en forme d'entonnoir.

8. Dispositif selon l'une des revendications précédentes,
**caractérisé en ce que** les barres de guidage (22) sont munies d'une gaine (23).

9. Dispositif selon la revendication 8,
**caractérisé en ce que** sont prévues deux gaines (23) pouvant se distinguer sur le plan visuel.

10. Dispositif selon l'une des revendications précédentes,
**caractérisé en ce que** l'élément de guidage (20) avec son anneau de support avant (24a) et l'élément de support arrière (24b) sont fixés sur un élément de fixation (44) par l'intermédiaire duquel l'élément de guidage (20) est fixé au robot industriel (2).

11. Dispositif selon l'une des revendications précédentes,
**caractérisé en ce qu'**au moins deux éléments de guidage (20) agencés côte à côte, sont fixés au robot industriel (2).

12. Dispositif selon l'une des revendications précédentes,
**caractérisé en ce que** le tuyau souple (12) est introduit à travers l'anneau de support avant (24a), la gaine (16) du tuyau souple ne s'étendant que jusqu'à une butée de tuyau (46) agencée dans l'élément de guidage (20), **en ce qu'**entre la butée de tuyau (46) et l'anneau de support avant (24a) est enserré, en guise d'élément de rappel, un ressort (48) guidé autour de la gaine (16) du tuyau souple, et **en ce que** plusieurs conduites d'alimentation (14) sortent de la gaine (16) du tuyau souple et sont menées latéralement hors de l'élément de guidage (20), entre deux barres de guidage (22) voisines, jusqu'à une interface de raccordement (40).

13. Dispositif selon l'une des revendications précédentes,
**caractérisé en ce que** plusieurs conduites d'alimentation (14) sont rassemblées en groupes, et les groupes sont menés hors de l'élément de guidage (20) vers des côtés différents.
